# FASCICULE DE BREVET EUROPEEN

(11) **EP 2 783 922 B1**
(45) Date de publication et mention de la délivrance du brevet: **06.12.2017**
(21) Numéro de dépôt: 14161591.4
(22) Date de dépôt: 25.03.2014
(51) Int. Cl.: B60R 19/18

(54) **Pare-chocs de véhicule automobile**
Stoßfänger für Kraftfahrzeug
Motor vehicle bumper

(30) Priorité: 27.03.2013 FR 1352774
(43) Date de publication de la demande: 01.10.2014
(73) Titulaire: Flex-N-Gate France, 75008 Paris (FR)
(72) Inventeur: Henigue, Christian, 25400 Audincourt (FR); Chambon, Guillaume, 25200 Montbeliard (FR); Droz-Bartholet, Laurent, 25400 Audincourt (FR)
(74) Mandataire: Lavoix

(56) Documents cités:
- DE-A1- 10 123 748
- US-A1- 2004 094 977
- US-A1- 2005 280 269
- US-B1- 6 364 384

## Description

La présente invention concerne en général les pare-chocs de véhicule automobile, en particulier les pare-chocs arrières de véhicule automobile.

Plus précisément, l'invention concerne un pare-chocs de véhicule automobile, comprenant :
- une peau de pare-chocs s'étendant suivant une direction transversale, la peau de pare-chocs comprenant une aile supérieure et un bouclier transversal apte à recevoir les chocs, l'aile supérieure et le bouclier délimitant entre eux une cavité ;
- une poutre transversale disposée dans la cavité et apte à être fixée à la caisse du véhicule ; et
- un support transversal de la peau de pare-chocs disposé dans la cavité et en regard du bouclier ;
le support transversal comprenant un cadre transversal apte à être rigidement fixé sur la caisse du véhicule, et une pluralité d'organes de support de l'aile supérieure de la peau de pare-chocs, chaque organe de support étant disposé sous l'aile supérieure de la peau de pare-chocs dans la cavité et étant propre à s'escamoter en cas de choc sur le bouclier, chaque organe de support étant formé par une plaque verticale.

Un tel pare-chocs est décrit dans le document EP 1 878 621.

Bien que ce type de pare-chocs présente une rigidité verticale améliorée par rapport à l'état de l'art, celle-ci demeure encore insuffisante. En effet, de manière générale, les constructeurs automobiles imposent que le pare-chocs arrière des véhicules automobiles puisse supporter une charge élevée suivant une direction verticale, avec une faible déformation. La charge et/ou la déformation peuvent être différentes selon les constructeurs automobiles. A titre d'exemple, la charge peut être de l'ordre de 1000 N pour une déformation de l'ordre de 8 mm.

En outre, ce type de pare-chocs ne présente pas une tenue à l'ensoleillement satisfaisante, c'est-à-dire que leur aspect et/ou leurs caractéristiques mécaniques peuvent être dégradés selon l'effet d'une exposition au soleil. Un autre type de pare-chocs correspondant au préambule de la revendication 1 est connu par US 2004/094977 A2. Dans ce contexte, l'invention vise à proposer un pare-chocs de véhicule automobile ayant une rigidité verticale améliorée vérifiant le critère énoncé ci-dessus, présentant une bonne résistance aux chocs arrières, et offrant une tenue à l'ensoleillement satisfaisante.

A cet effet, l'invention a pour objet un pare-chocs de véhicule automobile du type précité caractérisé en ce que chaque organe de support comprend en outre une plaque horizontale s'étendant perpendiculairement à la plaque verticale entre la plaque verticale et l'aile supérieure de la peau de pare-chocs, les plaqes verticales (48,50) étant liées au cadre transversal (26) le long de lignes de moindre résistances mécanique. Le pare-chocs selon l'invention peut comprendre l'une ou plusieurs des caractéristiques suivantes, prise(s) isolément ou suivant toute combinaison techniquement possible :
- chaque plaque verticale est disposée dans un plan incliné par rapport à des directions longitudinales et transversales ;
- la plaque horizontale s'étend transversalement de manière symétrique par rapport au plan de la plaque verticale, de façon à s'étendre vers deux plaques verticales adjacentes ;
- la plaque horizontale s'étend transversalement d'un seul côté du plan de la plaque verticale, de sorte à s'étendre vers une seule plaque verticale adjacente ;
- les plaques horizontales sont disjointes et régulièrement espacées les unes des autres ;
- les plaques horizontales sont liées aux plaques verticales et disjointes du cadre transversal ;
- le pare-chocs comprend une surface rigide inférieure disposée dans la cavité, la pluralité d'organes de support prenant appui sur la surface rigide inférieure ;
- la surface rigide inférieure est formée par la poutre ;
- chaque organe de support comprend en outre une paroi verticale reliée à une extrémité de la plaque verticale opposée au cadre et s'étendant transversalement par rapport au plan de la plaque verticale ; et
- le support transversal comprend en outre au moins une nervure s'étendant transversalement entre deux plaques verticales adjacentes et disposée dans un plan incliné par rapport à des directions verticales et transversales.

L'invention a en outre pour objet un véhicule caractérisé en ce qu'il comprend un pare-chocs selon l'une des caractéristiques précitées.

L'invention sera mieux comprise à la lecture de la description qui va suivre, donnée uniquement à titre d'exemple et faite en se référant aux dessins annexés sur lesquels :
- la figure 1 est une vue en coupe dans un plan vertical longitudinal d'un pare-chocs selon l'invention ;
- la figure 2 est une vue en perspective du support de la peau de pare-chocs de la figure 1 ; et
- la figure 3 est une vue en perspective de côté du support de la figure 2.

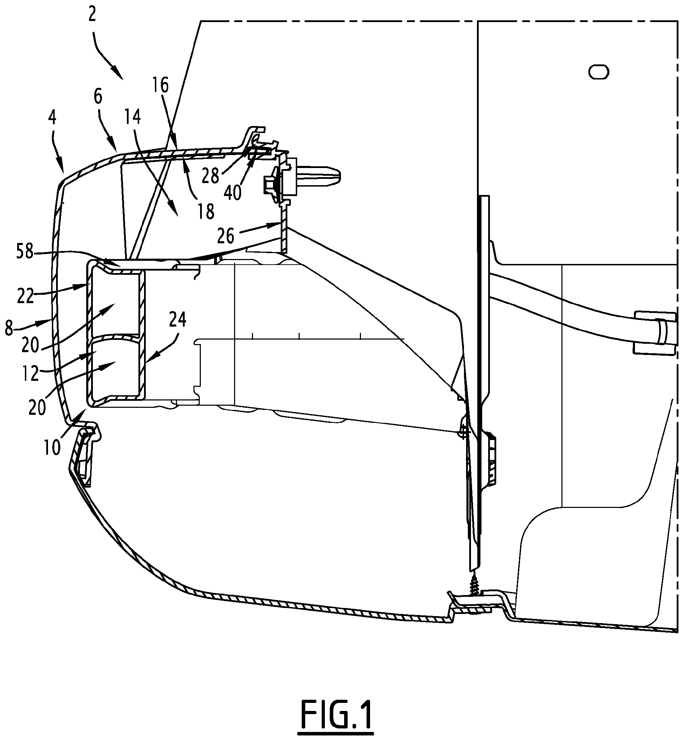

Le pare-chocs 2 représenté sur la figure 1 est destiné à être monté à l'arrière d'un véhicule automobile. Il est cependant entendu que l'invention pourrait être adaptée à un pare-choc avant de véhicule automobile. Dans la suite de la description, les directions longitudinale, transversale, verticale, l'avant, l'arrière, la droite et la gauche seront définis en référence au sens de déplacement normal du véhicule automobile.

Le pare-chocs 2 représenté sur la figure 1 comprend :
- une peau de pare-chocs 4 s'étendant suivant une direction transversale, la peau de pare-chocs 4 comprenant une aile supérieure 6 tournée vers le haut et un bouclier 8 transversal apte à recevoir les chocs, l'aile supérieure 6 et le bouclier 8 délimitant entre eux une cavité 10 tournée vers l'intérieur du véhicule ;
- une poutre 12 transversale disposée dans la cavité 10 de la peau de pare-chocs 4 et apte à être fixée à la caisse du véhicule ; et
- un support 14 transversal de la peau de pare-chocs 4 disposé dans la cavité 10 et en regard du bouclier 8.

La peau de pare-chocs 4 présente, dans un plan vertical longitudinal, une section sensiblement en C ouverte vers l'avant du véhicule. L'aile supérieure 6 s'étend dans un plan transversal horizontal, et présente une surface extérieure 16 et une surface intérieure 18. Le bouclier 8 est tourné vers l'arrière et vers le bas.

La poutre 12 est fixée sur la caisse du véhicule. Elle présente un espace intérieur creux 20, et, par exemple, une section longitudinale verticale rectangulaire. Elle est par exemple pourvue de deux grandes faces 22, 24 orientées respectivement vers le bouclier 8 et vers l'avant du véhicule. Les grandes faces 22, 24 sont verticales, transversales et parallèles l'une à l'autre. La grande face 22 orientée vers l'arrière est par exemple espacée longitudinalement du bouclier 8. En variante, la grande face 22 orientée vers l'arrière peut être proche voire au contact du bouclier 8.

Le support 14 transversal est une pièce en matière plastique venue de moulage. Il comporte un cadre 26, une patte transversale 28 de positionnement de la peau de pare-chocs 4, et une pluralité d'organes de support 30, 32 de l'aile supérieure 6 de la peau de pare-chocs 4. Chaque organe de support 30, 32 est disposé sous l'aile supérieure 6 de la peau de pare-chocs 4 dans la cavité 10 et est propre à s'escamoter en cas de choc sur le bouclier 8.

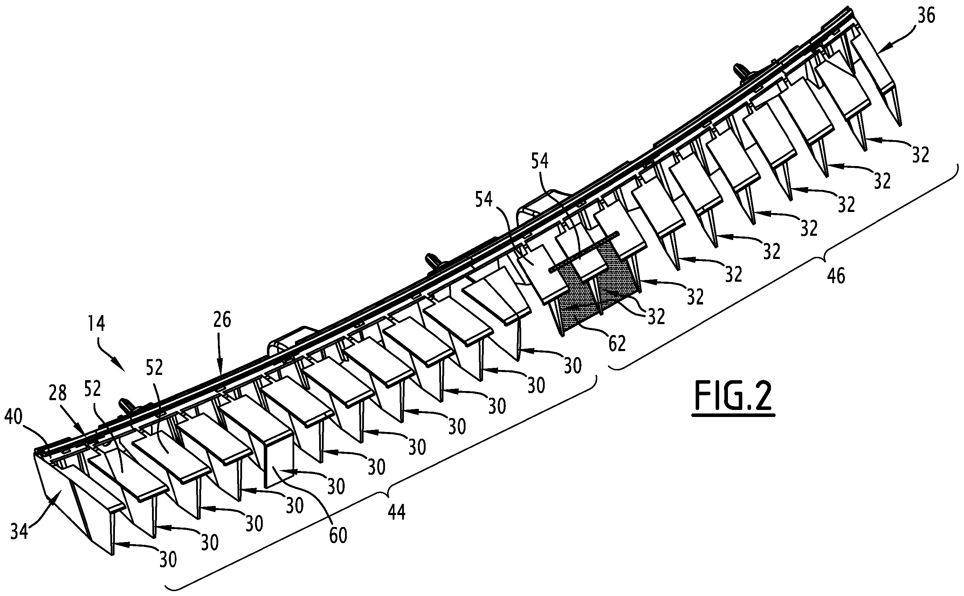

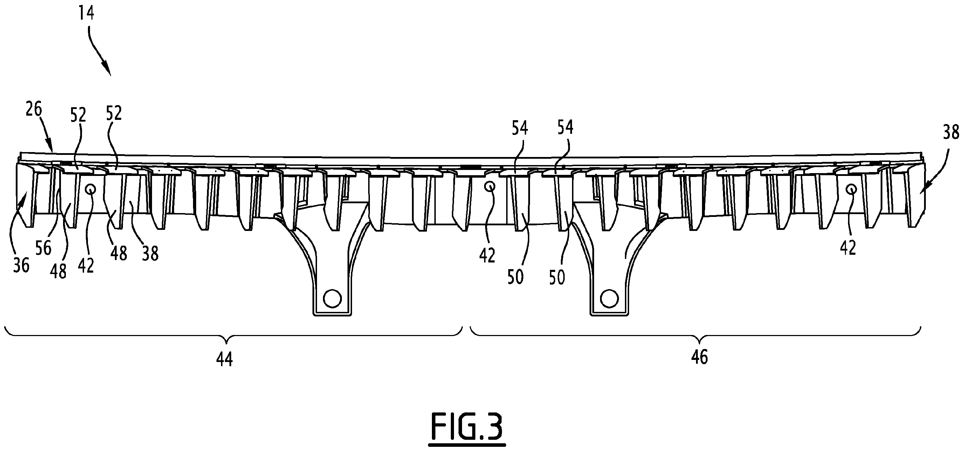

Comme représenté sur les figures 2 et 3, le cadre 26 présente une forme allongée transversalement et comprend deux extrémités 34, 36 opposées transversalement. Il comporte un fond 38 sensiblement plat et apte à être rigidement fixé sur la caisse du véhicule.

La patte transversale 28 s'étend sur toute la largeur transversale du support 14 et est placée au dessus du cadre 26. Elle est portée par le cadre 26 et définit une rainure transversale 40 ouverte vers l'arrière.

Comme visible sur la figure 3, le fond 38 est percé par exemple de trois trous 42 de fixation du support 14 sur la caisse.

La pluralité d'organes de support 30 est répartie en un premier ensemble 44 d'organes de support 30 et un second ensemble 46 d'organes de support 32. Chaque organe de support 30, 32 est formé par une plaque verticale 48, 50 et une plaque horizontale 52, 54 s'étendant transversalement par rapport à la plaque verticale 48, 50.

Les plaques verticales 48 du premier ensemble 44 d'organes de support 30 sont parallèles les unes aux autres et liées à une moitié transversale gauche du cadre 26. De même, les plaques verticales 50 du second ensemble 46 d'organes de support 32 sont parallèles les unes aux autres et liées à une moitié transversale droite du cadre 26. Les plaques verticales 48, 50 font saillie à partir du fond 38 vers l'arrière. Les plaques verticales 48 du premier ensemble 44 et les plaques verticales 50 du second ensemble 46 sont disposées de manière symétrique les unes aux autres par rapport au plan vertical longitudinal P médian du support 14, comme visible sur les figures 2 et 3.

Les plaques verticales 48 du premier ensemble 44 sont espacées transversalement les unes des autres. De même, les plaques verticales 50 du second ensemble 46 sont espacées transversalement les unes des autres.

Selon un mode de réalisation, les plaques verticales 48 du premier ensemble 44 s'étendent, par exemple, dans des plans verticaux inclinés par rapport aux directions longitudinales et transversales. Plus précisément, elles s'étendent, à partir du fond 38, vers l'arrière et vers le plan P médian du support 14. De même, les plaques verticales 50 du second ensemble 46 s'étendent, par exemple, dans des plans verticaux inclinés par rapport aux directions longitudinales et transversales. Elles s'étendent à partir du fond 38 vers l'arrière et vers le plan P médian du support 14.

Comme visibles sur les figures 2 et 3, les plaques verticales 48, 50 sont liées au cadre 26 le long de lignes verticales 56 espacées transversalement les unes des autres. Ces lignes verticales 56 présentent une moindre épaisseur relativement aux plaques verticales 48, 50 des premier et des second ensembles 44, 46 et sont donc des lignes de moindre résistance mécanique. Par exemple, les plaques verticales 48, 50 présentent une épaisseur de 3 mm, alors que les lignes verticales 56 de jonction entre les plaques verticales 48, 50 et le fond 38 présentent une épaisseur de 2,5 mm seulement.

Selon l'invention, chaque organe de support 30, 32 comprend en outre une plaque horizontale 52, 54 s'étendant perpendiculairement à la plaque verticale 48, 50, entre la plaque verticale 48, 50 et l'aile supérieure 6 de la peau de pare-chocs 4. Chaque plaque horizontale 52, 54 s'étend le long de la surface intérieure 18 de l'aile supérieure 6 de la peau de pare-chocs 4, et est en contact avec la surface intérieure 18 de l'aile supérieure 6. La présence des plaques horizontales 52, 54 augmente la surface de contact entre le support 14 et l'aile supérieure 6, assurant ainsi une meilleure rigidité verticale de la peau de pare-chocs 4.

Comme représentée sur les figures 2 et 3, la plaque horizontale 52, 54 s'étend transversalement de manière symétrique par rapport au plan de la plaque verticale 48, 50, de façon à s'étendre vers deux plaques verticales 48, 50 adjacentes. Ainsi, chaque organe de support 30 présente une forme en « T » comprenant la plaque verticale 48, 50 au dessus de laquelle repose la plaque horizontale 52, 54.

En variante, la plaque horizontale 52, 54 s'étend transversalement d'un seul côté seulement du plan de la plaque verticale 48, 50, de sorte à s'étendre vers une seule plaque verticale 48, 50 adjacente. Ainsi par exemple et comme visible sur les figures 2 et 3, les organes de support 30, 32 situés aux extrémités 34, 36 opposées transversalement du cadre 26 comprennent chacun une plaque verticale 48, 50 et une plaque horizontale 52, 54 disposée perpendiculairement au dessus de la plaque verticale 48, 50, la plaque horizontale 52, 54 s'étendant vers la plaque verticale 48, 50 adjacente en direction du centre du cadre 26, c'est-à-dire en direction du plan vertical longitudinal médian P. Chaque organe de support 30, 32 présente ainsi une forme en « L » comprenant la plaque verticale 48, 50 et la plaque horizontale 52, 54 disposée perpendiculairement à la plaque verticale 48, 50.

Les plaques horizontales 52 du premier ensemble 44 sont disjointes et régulièrement espacées transversalement les unes des autres. De même, les plaques horizontales 54 du second ensemble 46 sont disjointes et régulièrement espacées transversalement les unes des autres.

Les plaques horizontales 52, 54 sont liées aux plaques verticales 48, 50. En outre, les plaques horizontales 52, 54 sont disjointes du cadre transversal 26.

Le fait de prévoir des plaques horizontales disjointes permet d'assurer qu'en cas de choc arrière, les plaques verticales 48, 50 s'escamotent de façon aisée.

Par ailleurs, le pare-chocs 2 comprend en outre une surface rigide inférieure 58 disposée dans la cavité 10. La surface rigide inférieure 58 peut par exemple être formée par la poutre 12. La pluralité d'organes de support 30, 32 prend appui sur la poutre 12, ce qui offre au pare-chocs 2 une rigidité verticale supplémentaire.

En variante et comme visible sur la figure 2, chaque organe de support 30 comprend en outre une paroi verticale 60 reliée à une extrémité de la plaque verticale 48, 50 opposée au cadre 26, et s'étendant transversalement par rapport au plan de la plaque verticale 48, 50. La paroi verticale 60 permet d'améliorer la rigidité verticale du pare-chocs 2.

En variante, et comme visible sur la figure 2, le support transversal 14 comprend en outre au moins une nervure 62 s'étendant transversalement entre deux plaques verticales 48, 50 adjacentes et disposée dans un plan incliné par rapport à des directions verticales et transversales. La nervure 62 est propre à se replier sur elle-même en cas de choc longitudinal sur le bouclier 8. La nervure 62 permet d'améliorer la rigidité verticale du pare-chocs 2.

Selon un mode de réalisation, le support transversal 14 comprend plusieurs nervures 62, chaque nervure 62 étant disposée entre chaque plaque verticale 48, 50.

Le comportement du pare-chocs 2 décrit ci-dessus, en situation normale et en cas de choc arrière, va maintenant être détaillé.

Comme représenté sur la figure 1, en situation normale, la peau de pare-chocs 4 est engagée dans la patte transversale 28 du support 14. La patte transversale 28 du support 14 et la peau de pare-chocs 4 coopèrent pour assurer la mise en référence suivant les directions longitudinale et transversale de la peau de pare-chocs 4 par rapport au support 14. Le support 14 est lui-même rigidement fixé à la caisse du véhicule.

Par ailleurs, l'aile supérieure 6 de la peau de pare-chocs 4 est supportée par les organes de support 30, 32 formés par les plaques verticales 48, 50 et horizontales 52, 54.

En cas de choc longitudinal sur le bouclier 8, le bouclier 8 se déplace longitudinalement vers l'avant et sollicite la poutre 12. La poutre 12 s'escamote vers l'avant du véhicule. Le bouclier 8 se déplace ensuite vers l'organe de support 30, 32, qui s'escamote à son tour. Plus précisément, les organes de support 30, 32 sont sollicités vers l'avant par le bouclier 8, et s'escamotent pas pivotement autour des lignes verticales 58. Sur la représentation de la figure 3, les organes de support 30 du premier ensemble 44 pivotent vers la droite et les organes de support 32 du second ensemble 46 pivotent vers la gauche. Les organes de support 30, 32 se rabattent ainsi vers le centre du support 14. L'effacement des plaques est facilité du fait que les lignes verticales 56 sont des lignes de moindre épaisseur de matière, et du fait que les plaques horizontales 52, 54 sont disjointes du cadre 26.

On comprend ainsi que le pare-chocs selon l'invention est apte à supporter une charge élevée suivant une direction verticale, avec une faible déformation. Par exemple, quand un effort vertical de 1000 N est exercé sur le pare-chocs, la déformation de la peau de pare-chocs 4 est de l'ordre de 8 mm. Les plaques verticales 48, 50 assurent un positionnement extrêmement précis en Z de la peau de pare-chocs 4. En outre, les plaques horizontales 52, 54 améliorent la rigidité verticale du pare-choc 2 tout en ne modifiant pas son comportement en cas de chocs. Par ailleurs, les plaques horizontales 52, 54 assurent une tenue à l'ensoleillement satisfaisante, notamment dans une plage de températures comprises entre -30°C et 90°C. Enfin, elles assurent le respect de la géométrie de la peau de pare-chocs 4.

## Revendications

1. Pare-chocs (2) de véhicule automobile, comprenant :
- une peau de pare-chocs (4) s'étendant suivant une direction transversale, la peau de pare-chocs (4) comprenant une aile supérieure (6) et un bouclier (8) transversal apte à recevoir les chocs, l'aile supérieure (6) et le bouclier (8) délimitant entre eux une cavité (10) ;
- une poutre (12) transversale disposée dans la cavité (10) et apte à être fixée à la caisse du véhicule ; et
- un support transversal (14) de la peau de pare-chocs (4) disposé dans la cavité (10) et en regard du bouclier (8) ;
le support transversal (14) comprenant un cadre transversal (26) apte à être rigidement fixé sur la caisse du véhicule, et une pluralité d'organes de support (30, 32) de l'aile supérieure (6) de la peau de pare-chocs (4), chaque organe de support (30, 32) étant disposé sous l'aile supérieure (6) de la peau de pare-chocs (4) dans la cavité (10) et étant propre à s'escamoter en cas de choc sur le bouclier (8), chaque organe de support (30, 32) étant formé par une plaque verticale (48, 50) ;
**caractérisé en ce que** chaque organe de support (30, 32) comprend en outre une plaque horizontale (52, 54) s'étendant perpendiculairement à la plaque verticale (48, 50) entre la plaque verticale (48, 50) et l'aile supérieure (6) de la peau de pare-chocs (4), les plaques verticales (48, 50) étant liées au cadre transversal (26) le long de lignes de moindre résistance mécanique.

2. Pare-chocs (2) selon la revendication 1, **caractérisé en ce que** chaque plaque verticale (48, 50) est disposée dans un plan incliné par rapport à des directions longitudinales et transversales.

3. Pare-chocs (2) selon la revendication 1 ou 2, **caractérisé en ce que** la plaque horizontale (52, 54) s'étend transversalement de manière symétrique par rapport au plan de la plaque verticale (48, 50), de façon à s'étendre vers deux plaques verticales (48, 50) adjacentes.

4. Pare-chocs (2) selon la revendication 1 ou 2, **caractérisé en ce que** la plaque horizontale (52, 54) s'étend transversalement d'un seul côté du plan de la plaque verticale (48, 50), de sorte à s'étendre vers une seule plaque verticale (48, 50) adjacente.

5. Pare-chocs (2) selon l'une quelconque des revendications précédentes, **caractérisé en ce que** les plaques horizontales (52, 54) sont disjointes et régulièrement espacées les unes des autres.

6. Pare-chocs (2) selon l'une quelconque des revendications précédentes, **caractérisé en ce que** les plaques horizontales (52, 54) sont liées aux plaques verticales (48, 50) et disjointes du cadre transversal (26).

7. Pare-chocs (2) selon l'une quelconque des revendications précédentes, **caractérisé en ce qu'**il comprend une surface rigide inférieure (58) disposée dans la cavité (10), la pluralité d'organes de support (30, 32) prenant appui sur la surface rigide inférieure (58).

8. Pare-chocs (2) selon la renedication 7, **caractérisé en ce que** la surface rigide inférieure (58) est formée par la poutre (12).

9. Pare-chocs (2) selon l'une quelconque des revendications précédentes, **caractérisé en ce que** chaque organe de support (30, 32) comprend en outre une paroi verticale (60) reliée à une extrémité de la plaque verticale (48, 50) opposée au cadre transversale (26) et s'étendant transversalement par rapport au plan de la plaque verticale (48, 50).

10. Pare-chocs (2) selon l'une quelconque des revendications précédentes, **caractérisé en ce que** le support transversal (14) comprend en outre au moins une nervure (62) s'étendant transversalement entre deux plaques verticales (48, 50) adjacentes et disposée dans un plan incliné par rapport à des directions verticales et transversales.

## Patentansprüche

1. Stoßfänger (2) eines Kraftfahrzeugs, umfassend:
- eine Stoßfängerhaut (4), die sich in einer transversalen Richtung erstreckt, wobei die Stoßfängerhaut (4) einen oberen Flügel (6) und einen transversalen Schild (8), imstande, die Stöße aufzunehmen, umfasst, wobei der obere Flügel (6) und der Schild (8) zwischen sich einen Hohlraum (10) begrenzen,
- einen transversalen Balken (12), der in dem Hohlraum (10) angeordnet und imstande ist, an der Karosserie des Fahrzeugs befestigt zu sein, und
- einen transversalen Halter (14) der Stoßfängerhaut (4), der in dem Hohlraum (10) und gegenüber dem Schild (8) angeordnet ist,
wobei der transversale Halter (14) einen transversalen Rahmen (26) umfasst, der imstande ist, starr auf der Karosserie des Fahrzeugs befestigt zu sein, und eine Vielzahl von Halteorganen (30, 32) des oberen Flügels (6) der Stoßfängerhaut (4), wobei jedes Halteorgan (30, 32) unter dem oberen Flügel (6) der Stoßfängerhaut (4) in dem Hohlraum (10) angeordnet und imstande ist, sich bei einem Stoß auf den Schild (8) einzuziehen, wobei jedes Halteorgan (30, 32) von einer vertikalen Platte (48, 50) gebildet ist,
**dadurch gekennzeichnet, dass** jedes Halteorgan (30, 32) ferner eine horizontale Platte (52, 54) umfasst, die sich senkrecht zur vertikalen Platte (48, 50) zwischen der vertikalen Platte (48, 50) und dem oberen Flügel (6) der Stoßfängerhaut (4) erstreckt, wobei die vertikalen Platten (48, 50) mit dem transversalen Rahmen (26) entlang von Linien minderer mechanischer Festigkeit verbunden sind.

2. Stoßfänger (2) nach Anspruch 1, **dadurch gekennzeichnet, dass** jede vertikale Platte (48, 50) in einer in Bezug zu länglichen und transversalen Richtungen geneigten Ebene angeordnet ist.

3. Stoßfänger (2) nach Anspruch 1 oder 2, **dadurch gekennzeichnet, dass** sich die horizontale Platte (52, 54) transversal symmetrisch in Bezug zur Ebene der vertikalen Platte (48, 50) derart erstreckt, dass sie sich in Richtung von zwei benachbarten vertikalen Platten (48, 50) erstreckt.

4. Stoßfänger (2) nach Anspruch 1 oder 2, **dadurch gekennzeichnet, dass** sich die horizontale Platte (52, 54) transversal auf einer einzigen Seite der Ebene der vertikalen Platte (48, 50) derart erstreckt, dass sie sich in Richtung einer einzigen benachbarten vertikalen Platte (48, 50) erstreckt.

5. Stoßfänger (2) nach einem der vorangehenden Ansprüche, **dadurch gekennzeichnet, dass** die horizontalen Platten (52, 54) getrennt und gleichmäßig beabstandet voneinander sind.

6. Stoßfänger (2) nach einem der vorangehenden Ansprüche, **dadurch gekennzeichnet, dass** die horizontalen Platten (52, 54) mit den vertikalen Platten (48, 50) verbunden und vom transversalen Rahmen (26) getrennt sind.

7. Stoßfänger (2) nach einem der vorangehenden Ansprüche, **dadurch gekennzeichnet, dass** er eine untere starre Fläche (58) umfasst, die in dem Hohlraum (10) angeordnet ist, wobei sich die Vielzahl von Halteorganen (30, 32) auf der unteren starren Fläche (58) abstützen.

8. Stoßfänger (2) nach Anspruch 7, **dadurch gekennzeichnet, dass** die untere starre Fläche (58) von dem Balken (12) gebildet ist.

9. Stoßfänger (2) nach einem der vorangehenden Ansprüche, **dadurch gekennzeichnet, dass** jedes Halteorgan (30, 32) ferner eine vertikale Wand (60) umfasst, die mit einem Ende der vertikalen Platte (48, 50) gegenüber dem transversalen Rahmen (26) verbunden ist und sich transversal in Bezug zur Ebene der vertikalen Platte (48, 50) erstreckt.

10. Stoßfänger (2) nach einem der vorangehenden Ansprüche, **dadurch gekennzeichnet, dass** der transversale Halter (14) ferner mindestens eine Rippe (62) umfasst, die sich transversal zwischen zwei benachbarten vertikalen Platten (48, 50) erstreckt und in einer zu vertikalen und transversalen Richtungen geneigten Ebene angeordnet ist.

## Claims

1. A motor vehicle bumper (2), comprising:
- a bumper skin (4) extending along a transverse direction, the bumper skin (4) comprising an upper wing (6) and a transverse shield (8) able to receive impacts, the upper wing (6) and the shield (8) defining a cavity (10) between them;
- a transverse beam (12) arranged in the cavity (10) and able to be fastened to the body shell of the vehicle; and
- a transverse support (14) of the bumper skin (4) arranged in the cavity (10) and across from the shield (8);
the transverse support (14) comprising a transverse frame (26) able to be rigidly fastened on the body shell of the vehicle, and a plurality of support members (30, 32) for the upper wing (6) of the bumper skin (4), each support member (30, 32) being arranged below the upper wing (6) of the bumper skin (4) in the cavity (10) and being able to retract in case of impact on the shield (8), each support member (30, 32) being formed by a vertical plate (48, 50);
**characterized in that** each support member (30, 32) further comprises a horizontal plate (52, 54) extending perpendicularly to the vertical plate (48, 50) between the vertical plate (48, 50) and the upper wing (6) of the bumper skin (4), the vertical plates (48, 50) being connected to the transverse frame (26) along the lines of least mechanical resistance.

2. The bumper (2) according to claim 1, **characterized in that** each vertical plate (48, 50) is arranged in an inclined plane relative to longitudinal and transverse directions.

3. The bumper (2) according to claim 1 or 2, **characterized in that** the horizontal plate (52, 54) extends transversely symmetrically relative to the plane of the vertical plate (48, 50), so as to extend toward two adjacent vertical plates (48, 50).

4. The bumper (2) according to claim 1 or 2, **characterized in that** the horizontal plate (52, 54) extends transversely on a single side of the plane of the vertical plate (48, 50), so as to extend toward a single adjacent vertical plate (48, 50).

5. The bumper (2) according to any one of the preceding claims, **characterized in that** the horizontal plates (52, 54) are separated and regularly spaced apart from one another.

6. The bumper (2) according to any one of the preceding claims, **characterized in that** the horizontal plates (52, 54) are connected to the vertical plates (48, 50) and separate from the transverse frame (26).

7. The bumper (2) according to any one of the preceding claims, **characterized in that** it comprises a lower rigid surface (58) arranged in the cavity (10), the plurality of support members (30, 32) leaning on the lower rigid surface (58).

8. The bumper (2) according to claim 7, **characterized in that** the lower rigid surface (58) is formed by the beam (12).

9. The bumper (2) according to any one of the preceding claims, **characterized in that** each support member (30, 32) further comprises a vertical wall (60) connected to one end of the vertical plate (48, 50) opposite the transverse frame (26) and extending transversely relative to the plane of the vertical plate (48, 50).

10. The bumper (2) according to any one of the preceding claims, **characterized in that** the transverse support (14) further comprises at least one rib (62) extending transversely between two adjacent vertical plates (48, 50) and arranged in an inclined plane relative to vertical and transverse directions.
